(19) Europäisches Patentamt
European Patent Office
Office européen des brevets

(11) **EP 2 874 407 A1**

(12) **EUROPEAN PATENT APPLICATION**
published in accordance with Art. 153(4) EPC

(43) Date of publication:
**20.05.2015 Bulletin 2015/21**

(21) Application number: **13817160.8**

(22) Date of filing: **30.01.2013**

(51) Int Cl.:
*H04R 1/02* [(2006.01)]   *C08K 3/00* [(2006.01)]
*C08L 67/04* [(2006.01)]   *C08L 101/16* [(2006.01)]

(86) International application number:
**PCT/JP2013/000500**

(87) International publication number:
**WO 2014/010138 (16.01.2014 Gazette 2014/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.07.2012 JP 2012154257**

(71) Applicant: **Panasonic Intellectual Property
Management Co., Ltd.
Osaka-shi, Osaka 540-6207 (JP)**

(72) Inventors:
• **NAGASHIMA, Takashi**
  **Osaka-shi, Osaka 540-6207 (JP)**
• **NAKAO, Suguru**
  **Osaka-shi, Osaka 540-6207 (JP)**
• **TADA, Naoto**
  **Osaka-shi, Osaka 540-6207 (JP)**

(74) Representative: **Eisenführ Speiser
Patentanwälte Rechtsanwälte PartGmbB
Johannes-Brahms-Platz 1
20355 Hamburg (DE)**

(54) **AUDIO EQUIPMENT**

(57)   An acoustic device is provided with an outer casing comprising a molded article which is made of a resin composition comprising a resin component comprising poly(lactic acid) and/or a lactic acid copolymer in an amount of 50 % by weight or more, and at least an inorganic filler and a hydrolysis inhibitor, wherein the resin composition has a loss factor of 0.04 or more, the resin composition and the molded article has a glossy surface having a 20 degree specular glossiness ($G_s(20°)$) of 60 or more, measured according to JIS Z 8741. The acoustic device provided with the outer casing made of this environmental resin such as poly(lactic acid) and/or the lactic acid copolymer has good resonance peak degree at a low sound frequency range.

*Fig. 2*

**Description**

Technical Field

The present technique relates to an audio device provided with an outer casing which is formed of a biomass-originated resin suppressing consumption of exhaustible resources, and increase in carbon dioxide which is a global warming gas.

Background ARt

As audio devices, speakers, stereo component system, CD players, miniature stereo component system, car audio, portable music players, IC recorders, displaying devices with built-in speakers (including liquid crystal displays, organic EL displays, plasma displays and the like) are commercialized and various developments are made in order to improve sound quality.

In the acoustic device, one of the factors degrading the sound quality is resonance of the outer casing of the acoustic device, which is caused by the acoustic wave generated during operation of the acoustic device is driven. In order to reduce the resonance, a high-rigid material of which internal loss is reasonably large is desirable and wood such as a particle board is used as the outer casing.

On the other hand, product differentiation by design is becoming important because of the progress of digitization of video and audio devices. Various requests for design even in acoustic devices are made, and one of the requests is flexibility of the shape of the outer casing. A resin molded article is promising as a method for increasing the flexibility of the shape at low cost. In order to meet this request, a resin material for injection molding has been used, wherein a vulcanized rubber and at least one inorganic filler are mixed with a thermoplastic or a thermosetting synthetic resin (JP A H06-169498, Patent Literature 1).

However, as the resin molded articles become widely used, there is being posed, as a problem, disposal treatment of resin molded articles when spent devices are disposed of.

Recently, attention has been directed to resins (or plastics) which decompose by bacterial action when they are buried in the ground. These resins, which are called biodegradable resins (or plastics), have characteristics of being degraded into water ($H_2O$) and carbon dioxide ($CO_2$) in the presence of aerobic bacteria. Biodegradable resins are in practical use in the field of agriculture and also in practical use, for example, as packaging materials for disposable articles and as materials of compostable garbage bags.

Articles using biodegradable resins, for example, when used in the field of agriculture, may be advantageous also to users because spent plastics do not need to be collected.

Further, in recent days, plant-originated resins are also receiving attention in the fields of electronic devices and automobiles. Plant-originated resins are obtained by polymerization or co-polymerization of monomers obtained from plant materials. Plant-originated resins receive attention as earth-conscious resins, for example, for reasons that they can be produced without relying on oil resources, that plants used as raw materials absorb carbon dioxide and grow, and that their combustion calories are generally low and the amount of generated $CO_2$ is small even when their disposal is performed by an incineration treatment.

Plant-originated resins are generally biodegradable, but do not necessarily need to be biodegradable when considered only from a viewpoint of preventing the depletion of oil resources. More specifically, resins which contribute to environmental protection will include, in addition to biodegradable resins, plant-originated resins which are not biodegradable. Hereinafter, these resins are referred to collectively as "environmental resins".

At present, resins which are in use as environmental resins are divided into three main classes: those based on poly(lactic acid) (hereinafter, sometimes referred to as "PLA"), on PBS (polybutylene succinate (a copolymeric resin of 1,4-butanediol and succinic acid)), and on PET (modified polyethylene terephthalate).

Among these resins, PLAs can be produced by chemical synthesis in which sugars generated by plants such as corns or sweet potatoes are used as raw materials, and have a possibility of industrial production. Plastics containing such plant-originated resins are referred to as bioplastics. Particular attention is paid to PLAs because mass production of PLAs has been begun using corns as raw material, and thus there is a desire to develop a technology by which PLAs can be used not only to applications requiring biodegradation properties, but also to a wide variety of applications.

JP-A 2004-186915 (Patent Literature 2) proposed a method for improving characteristics of the environmental resin, wherein a resin of a biodegradable high-molecular compound containing an inorganic material and a hydrolysis inhibitor is used as the outer casing material for the acoustic device.

Further, a method of incorporating another component has been proposed. For example, there was reported the possibility of applying of PLAs to personal-computer outer casings by incorporating kenaf fibers into PLAs (Serizawa et al., "Development of Kenaf-Fiber-Reinforced Poly(lactic acids)," Proceedings of the 14th Annual Meeting of the Japan Society of Polymer Processing, pp.161-162, 2003).

Background Art Literatures

Patent Literatures

Patent Literature 1: JP A H06-169498
Patent Literature 2: JP A 2004-186915

Non-Patent Literatures

Non-Patent Literature 1: Serizawa et al., "Development of Kenaf-Fiber-Reinforced Poly(lactic acids)," Proceedings of the 14th Annual Meeting of the Japan Society of Polymer Processing, pp.161-162, 2003

SUMMARY OF THE INVENTION

Problems to be Solved by the Invention

The present technique was made in view of the current situation, and the object of the present technique is to provide an acoustic device provided with an outer casing formed of an environmental resin such as poly lactic acid (PLA) and/or a lactic acid copolymer, which has excellent characteristics.

Means to Solve the Problems

The present technique is an acoustic device provided with an outer casing comprising a molded article which is made of a resin composition, the resin composition including a resin component containing poly(lactic acid) and/or a lactic acid copolymer in an amount of 50 % by weight or more, and at least an inorganic filler and a hydrolysis inhibitor, wherein:

the resin composition has an loss factor of 0.04 or more, and
the molded article has a glossy surface having a 20 degree specular glossiness ($G_s(20°)$) of 60 or more, measured according to JIS Z 8741.

Effect of the Invention

According to the present technique, it is possible to provide an acoustic device including an outer casing which is made of a resin composition of high sound quality having a surface of high specular glossiness, the resin composition including an earth-conscious and preferably biodegradable environmental resin as the main resin component and having a low resonance peak degree.

BRIEF DESCRIPTION OF THE DRAWINGS

Fig. 1 is a perspective view showing appearance of a speaker device as an example of an audio device according to an embodiment of the present technique.
Fig. 2 is a sectional view showing schematic internal configuration of the speaker device shown in Fig. 1.

Description of Embodiment

In the following, a speaker device is exemplified as one example of the disclosure of the acoustic device according to the present technique. However, needlessly detailed description may be omitted. For example, the detailed description for well-known matters and overlapped description for the same construction may be omitted. This is to avoid making the following description needlessly lengthy, and to enable those skilled in the art to understand the following description easily.
It should be noted that the present inventors provide the attached drawings and the following description such that those skilled in the art can understand the present technique sufficiently, and they do not intend to limit the subject matter described in the claims by the drawings and the description.

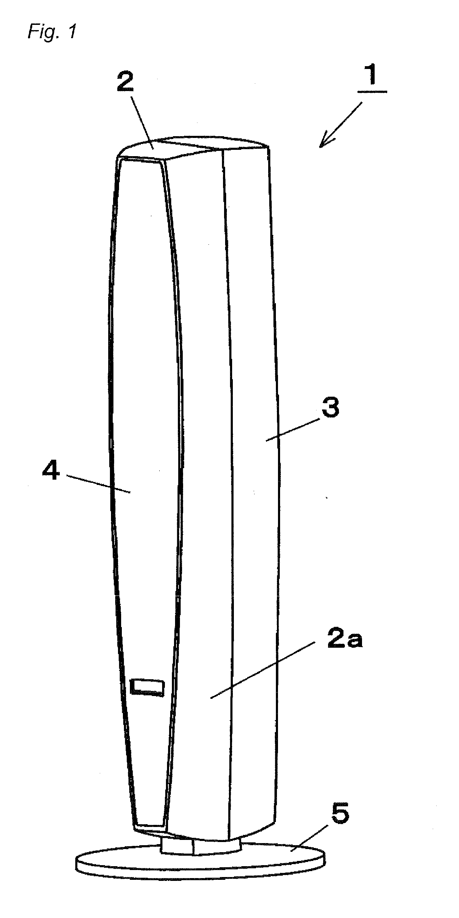

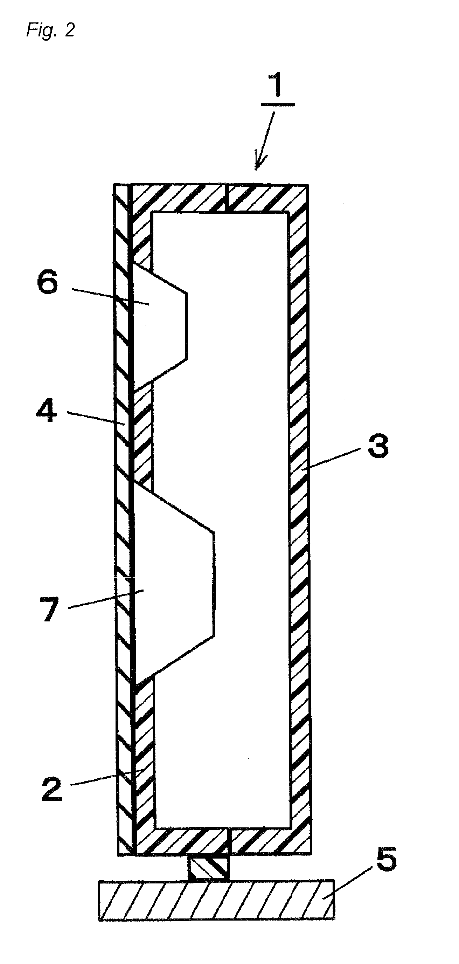

Fig. 1 is a perspective view showing appearance of a speaker device 1 according to an embodiment of the present technique. Fig. 2 is a sectional view showing a schematic internal configuration of the speaker device 1 shown in Fig. 1.

An outer casing of the speaker device 1 according to an embodiment of the present technique has a front cabinet 2 and a back cabinet 3 as shown in Fig. 1. A speaker net 4 formed of porous fibers is attached to a front face of the front cabinet 2. The back cabinet 3 is fastened to the front cabinet 2 with screws (not shown). Further, a stand 5, which is fixed to the bottom of the front cabinet 2, holds the speaker device 1 in a state of standing.

As shown in Fig. 2, a tweeter speaker 6 and a woofer speaker 7 are installed in openings formed in the front face of the front cabinet 2. The speaker net 4 covers the front face of the front cabinet 2 such that diaphragms of the tweeter speaker 6 and the woofer speaker 7 are not exposed. Input terminals (not shown) for inputting acoustic signals to the tweeter speaker 6 and the woofer speaker 7 are placed in the back cabinet 3.

The front cabinet 2 has a glossy design surface 2a, which provides the cabinet with external beauty.

The present technique employs a construction wherein the outer casing of the speaker device 1, which comprises the front cabinet 2 and the back cabinet 3, includes an molded article made of a resin composition including a resin component containing poly(lactic acid) and/or a lactic acid copolymer in an amount of 50 % by weight or more, an inorganic filler, a hydrolysis inhibitor and/or a plasticizer (such resin composition may be called merely "resin composition"). The loss factor of the resin composition is made 0.04 or more entirely, by the construction wherein the inorganic filler, the hydrolysis inhibitor and/or the plasticizer are contained in the poly(lactic acid) and/or the lactic acid copolymer.

Here, the "loss factor" means an energy-absorbing ratio of the material when the material is deformed. The energy absorbed by the material is converted to heat. In other words, as the loss factor is larger, the resonance peak due to the acoustic wave in the acoustic device can be more quickly settled, whereby the unnecessary vibration of the cabinet which is the outer casing of the speaker device 1 is reduced. Thus, the sound quality can be improved. Further, the rigidity, that is, the Young's modulus of the resin composition is a factor reducing the resonance peaks. As the Young's modulus is higher, the resonance peak can be reduced further.

PLAs and/or lactic acid copolymers are resins which are obtained by using lactic acid as raw material and polymerizing it or co-polymerizing it with other monomer(s). Lactic acid can be obtained, for example, by fermentation of starch or sugars which are obtained from corns, sweet potatoes, or the like. Therefore, PLAs and the lactic acid copolymers can be supplied as plant-originated resin. Many of PLAs and lactic acid copolymers have biodegradation properties. Therefore, PLAs and the lactic acid copolymers are environmental resins.

PLAs and/or the lactic acid copolymers, particularly PLAs, have superior transparency and stiffness, and thus molded articles formed of these can be used for various applications such as an outer casing of an electronic device other than the outer casing of the speaker device 1.

On the other hand, PLAs and/or lactic acid copolymers have disadvantages of exhibiting a decreased resistance to heat and impact and a slightly decreased injection moldability. For these reasons, PLAs and/or lactic acid copolymers may be used in mixture with other resin(s) and/or modifier(s), particularly when they are injection molded. For example, since PBSs have superior heat resistance and are biodegradable per se, they are suitable for mixing into PLAs and/or lactic acid copolymers. Alternatively, PLAs and/or lactic acid copolymers may be modified using agents which are commercially available as poly(lactic acid) modifiers. Alternatively, an impact absorber may be used for improving impact resistance of PLAs and/or lactic acid copolymers.

Poly(lactic acid) may be one known in the art. For example, poly(lactic acids) may include a poly(L-lactic acid) consisting of the L-lactic acid unit; a poly(D-lactic acid) consisting of the D-lactic acid unit; a mixture including a poly(lactic acid) stereo-complex formed by mixing a poly(L-lactic acid) and a poly(D-lactic acid); or a poly(lactic acid) block copolymer obtained by solid polymerization of this mixture.

The lactic acid copolymer is a copolymer which is obtained, for example, by co-polymerizing L-lactide and/or D-lactide made from L-lactic acid and/or D-lactic acid, with an oxyacid, lactone, dicarboxylic acid, or polyhydric alcohol (for example, caprolactone or glycolic acid), which is co-polymerizable therewith.

An outer casing according to the present technique contains PLA and/or the lactic acid copolymer as the resin component, wherein PLA and/or the lactic acid copolymer accounts for 50% by weight or more of the total weight of the resin component as the main ingredient. Since PLA and/or the lactic acid copolymer constitutes 50% by weight or more of the whole resin component, the outer casing is capable of being disposed easily.

In the present technique, ingredients other than PLA and/or the lactic acid copolymer may include other resin(s), the below-mentioned inorganic filler, a hydrolysis inhibitor, a plasticizer, and an optionally-added additive. The resin component of which the main ingredient is PLA and/or the lactic acid copolymer may include another resin. Specifically, the resin component of which the main ingredient is PLA and/or the lactic acid copolymer may include one or more resins selected from:

(a) a thermoplastic resin, such as polyethylene, polypropylene, polystyrene, an ethylene vinyl acetate copolymer, poly(vinyl chloride), acrylonitrile-styrene (AS), an acrylonitrile/butadiene/styrene (ABS) copolymer or a mixture, poly(ethylene terephthalate) (PET), and poly(butylene terephthalate) (PBT);

(b) a thermoplastic elastomer, such as a butadiene rubber (BR), an isoprene rubber (IR), a styrene/butadiene copolymer (SBR), a hydrogenated styrene/butadiene copolymer (HSBR), and a styrene/isoprene copolymer (SIR);

(c) a thermoplastic engineering resin, such as polyamide (PA), polycarbonate (PC), and polyphenylene ether (PPE);

(d) a super-engineering resin, such as polyarylate (PAR) and polyether ether ketone (PEEK); and

(e) a thermosetting resin, such as an epoxy resin (EP), a vinyl ester resin (VE), polyimide (PI), and polyurethane (PU).

The thermoplastic elastomers can serve as an impact absorber for PLA and/or the lactic acid copolymer.

The inorganic filler can improve the rigidity of the resin composition which contributes to the improvement in sound quality and can impart the resonance peak degree at a low sound frequency range (referred to as "low resonance peak degree") to PLA and/or the lactic-acid copolymer. Fiber shape, plate shape, granular shape and powder shape may be employed as the shape of the inorganic filler in the present technique. It should be noted that when the inorganic filler has a size (a diameter and/or length, if the inorganic filler is the fiber-shape, granular-shaped, or powder-shaped one; and a maximum length of a plate face and thickness, if the inorganic filler is the plate-shaped one) equal to or smaller than the human resolution (for example, 0.1 mm) and therefore has transparency in the resin composition, change in chroma, brightness and/or hue of the resin composition per se can be suppressed. For this reason, the glossiness in the design surface of the outer casing is not impaired, as described below.

The fiber-shaped inorganic fillers include glass fibers, asbestos fibers, carbon fibers, graphite fibers, metal fibers, potassium titanate whisker, aluminum borate whisker, magnesium-based whisker, silicon-based whiskers, wollastonite, imogolite, sepiolite, slag fibers, Zonolite, Elastite, gypsum fibers, silica fibers, alumina fibers, zirconia fibers, boron nitride fibers, silicon nitride fibers, boron fibers, and silica-alumina fibers. Among these fiber-shaped inorganic substances, the glass fibers and the carbon fibers are preferred.

The content of the fiber-shaped inorganic substance preferably has optical transparency in order to obtain moldability and glossiness of the design surface of the molded article. The content is preferably 1 % to 50 % by weight, and more preferably 1 % to 10 % by weight, relative to 100 % by weight of the poly(lactic acid) resin.

The plate-shaped, granular-shaped and powder-shaped inorganic substances include glass flakes, glass beads, non-swelling mica, graphite, metallic foils, ceramic beads, talc, clay, sericite, zeolite, bentonite, dolomite, kaolin, silicic-acid powder, feldspar powder, potassium titanate, Shirasu balloon (expanded volcanic soil), calcium carbonate, magnesium carbonate, barium sulfate, calcium oxide, aluminum oxide, titanium oxide, aluminum silicate, silicon oxide, gypsum, novaculite, dawsonite, wollastonite, montmorillonite, beidellite, nontronite, saponite, hectorite, sauconite, fluorinated hectorite, vermiculite, halloysite, kanemite, kenyaite and the like. Among these plate-shaped, granular-shaped and powder-shaped inorganic substances, glass flakes, glass beads, talc and mica are preferred, and glass flakes and glass beads are further preferred.

Next, the hydrolysis inhibitor may be contained in the resin composition in order to increase the loss factor of the resin composition, which contributes to the improvement in sound quality. The hydrolysis inhibitors include carbodiimide compounds, aliphatic alcohols, amide compounds, epoxy compounds, and oxazoline compounds. Monocarbodiimide compounds and polycarbodiimide compounds are preferable from the viewpoints of moldability, heat resistance and flowability.

As the monocarbodiimide compounds, Stabaxol I LF (manufactured by Rhein Chemie), Stabaxol I (manufactured by Rhein Chemie), N,N'-dicyclohexylcarbodiimide, N,N'-diisopropylcarbodiimide, N-ethyl-N'-(3-dimethylaminopropyl)carbodiimide hydrochloride may be exemplified. As the polycarbodiimide compounds, Carbodilite LA-1 (manufactured by Nisshinbo Chemical Inc.) and Stabaxol P (manufactured by Rhein Chemie) and Stabaxol P400 (manufactured by Rhein Chemie) may be exemplified. Each of the above-mentioned monocarbodiimide compounds and polycarbodiimide compounds may be used alone or a combination of two or more of the above-mentioned monocarbodiimide compounds and polycarbodiimide compounds may be used.

The content of the hydrolysis inhibitor, which content makes moldability good, is preferably 0.1 % to 5 % by weight, and more preferably 0.5 % to 3 % by weight relative to 100 % by weight of the poly(lactic acid) resin.

Next, the plasticizer may be contained in the resin composition to increase the loss factor of the resin composition, which contributes to the improvement in sound quality. The plasticizers include polyester-based plasticizers, glycerin-based plasticizers, polycarboxylic acid ester-based plasticizers, phosphate ester based plasticizers, polyalkylene glycol-based plasticizers, epoxy-based plasticizers, plasticizers based on benzoic acid ester of aliphatic polyol, oxyacid ester-based plasticizers, pentaerythritol, sorbitol, polyacrylate-based plasticizers, silicone oils, and paraffins.

The resin composition used in the present technique may contain other component(s) than the above-described resin component. The other component(s) is an additive(s) commonly added to resin. Additives are, for example, inorganic nucleating agents such as talc, clay, montmorillonite and so on; organic nucleating agents such as calcium lactate, benzoates and so on; antioxidants such as 2,6-di-t-butyl-4-methylphenol and butylated hydroxyanisole; releasing agents such as glycerin mono-aliphatic acid esters, sorbitan aliphatic acid esters, and polyglycerin aliphatic acid esters; colorings such as carbon black, ketjen black, titanium oxide, and lapis lazuli; impact absorbers such as butylene rubbers; anti-fogging agents such as glycerin aliphatic acid esters and monostearyl citrate.

The resin composition can be produced by kneading poly(lactic acid) and/or the lactic acid copolymer, the inorganic filler, the hydrolysis inhibitor, the plasticizer, and an additive(s) which is/are optionally added. In other words, the resin composition of which main component is poly(lactic acid) and/or the lactic acid copolymer can be produced by a kneading step wherein the inorganic filler, the hydrolysis inhibitor and the plasticizer, and the optional additive(s) are added to the solution in which the resin component is melted and then the composition is kneaded. This production method makes it possible to obtain the low resonance peak degree, not requiring another step for compounding a component imparting the low resonance peak degree, whereby the production cost can be suppressed.

In the above-mentioned kneading step, the production can be accomplished by the melt-kneading using a two-screw extruder. However, the mixing method is not limited particularly, and conventional methods such as a batch-wise kneading with a Banbury mixer can be applied.

The outer casing according to the present technique is formed into a desired shape by an injection molding method or a compression molding method. As shown in Fig. 1, the speaker device 1 is used as an independent and visible structure. Thus, the outer casing of the speaker device 1 is required to have design, such as deep gloss, according to the user's preference. Deepness can be adapted to the user's request by adding the colorings or the anti-fogging agents to the resin composition. The glossiness can be adapted to the user's request by mirror finishing the inner surface of the molding face of the mold which is used when the resin composition is molded into the outer casing. In other words, at least a part of the molded surface of the outer casing can be made specular surface when the outer casing is produced by the injection molding method or the compression molding method with use of the mold wherein at least a part of the inner surface is mirror finished. It should be noted that the injection molding method and the extrusion molding method involve the kneading step wherein the resin composition to which the low resonance peak degree is imparted is produced according to the above-described method is melted and kneaded with a kneader or the like. Therefore, when these molding methods are employed, the addition of a component that imparts the low resonance peak degree to the resin component may be performed in this kneading step. When the component for imparting the low resonance peak degree is added in this manner, another step of adding the component for imparting the low resonance peak degree is not required, whereby the outer casing of the present technique can be given effectively.

As described above, the front cabinet 2 and the back cabinet 3 of the speaker device 1 resonate by acoustic waves which are generated, according to the signals input from an external output device, by the tweeter speaker 6 and the woofer speaker 7. When the resonance peak is large and the settlement is slow, the distortion is generated in sound and therefore the outer casing cannot be said to be suitable for the acoustic device.

In the above description, the construction is studied, wherein the resonance peak is reduced by the front cabinet 2 and the back cabinet 3 which is given by molding the resin component containing poly(lactic acid) and/or the lactic acid copolymer in an amount of 50 wt% or more, the inorganic filler, the hydrolysis inhibitor and the plasticizer. As a result, the loss factor of the resin composition which is used for the front cabinet 2 and the back cabinet 3, affects the reduction in the resonance peak.

Specifically, as shown in the below-described examples, it has been found that when the loss factor of the molded resin composition of low resonance peak degree, is 0.04 or more, the sound quality is favorably affected. It has been found that when the Young's modulus of the resin composition is 3 GPa or more, favorably improving effect is observed in the sound quality.

Here, the loss factor and the Young's modulus of the resing composition were determined by the below-described method. Firstly, the resin composition is molded by the injection molding method with a cylinder temperature of 185 °C, a mold temperature of 100 °C and cooing time of 60 seconds, and then a sample having a length of 150 mm, a width of 40 mm, and a thickness of 2 mm, was obtained. This sample was cut into a specimen with a length, a width and a thickness of 150 mm x 10 mm x 2 mm. This specimen was fixed to an exciter in a cantilever manner, and sign sweep signals were generated by a FFT analyzer to vibrate the material specimen. The amplitude of the tip of the material sample was determined with a laser displacement gauge, whereby the resonance frequency of the resin composition can be determined by the FFT analyzer. The Young's modulus (dynamic elastic modulus) can be determined from this function of frequency. Further, the loss factor is determined from the resonance state.

When the loss factor of the resin composition, determined by the above-described method, is a particular value or more, the outer casing of the speaker device 1 assembled as the front cabinet 2 and the back cabinet 3 can suppress the deterioration of sound quality due to the resonance peak.

Further, the glossiness of the outer casing of the speaker device 1, which is requested by the user, was evaluated in the following manner. The molded surface of the outer casing is formed by molding the resin composition with the mirror-finished mold, as described above. Therefore, the glossiness was determined according to JIS Z 8741. It should be noted, that JIS Z 8741 includes Methods 1 to 5 and there are Methods 3 to 5 for molding of resin composition. In the present technique, a 20 degree specular glossiness ($G_s(20°)$) stipulated in Method 5 was employed in order not only to determine the specular glossiness, but also to evaluate the correlation with the impression of design given to the user. As a result, it has been found that the glossy surface having 20 degree specular glossiness ($G_s(20°)$) of 60 or more exerts excellent design effect.

The specular glossiness ($G_s(\theta)$, wherein $\theta$ is an angle of incidence), is determined according to JIS Z 8741. Specifically, determinations are made of a specular light flux $\varphi_S$ from a given surface of a specimen at a specified angle of incidence $\theta$ (an angle between the optical axis of a light detector system and the normal line of the given surface of the specimen) and of a specular light flux $\varphi_{OS}$ from a standard surface at the specified angle of incidence $\theta$, and calculation is performed according to the following equation, in which $G_{OS}(\theta)$ is a glossiness of the standard surface used (100 %).

The standard surface is a surface of a glass with a refractive index of 1.567. $$G_s(\theta) = \frac{\varphi_s}{\varphi_{os}} \bullet G_{os}(\theta)$$

Specifically, the acoustic device of the present technique is used for, in addition to the speaker device, a stereo component system, a CD player, a miniature stereo component system, car audio, a portable music player, an IC recorder, a displaying device with built-in speakers (including a liquid crystal display, an organic EL display, and a plasma display), and an outer casing of an electric component.

Then, detailed description will be made by specific examples.

Examples

A plurality of resin compositions of low resonance peak degree containing poly(lactic acid) and/or the lactic acid copolymer in an amount of 50 wt% or more, the inorganic filler imparting the low resonance peak degree, the hydrolysis inhibitor and the plasticizer, were prepared such that they have different loss factors. In the resin compositions, a PLA Polymer 3001D (manufactured by NatureWorks LLC) was used as poly(lactic acid); one or more of glass fibers, glass beads, and talc was employed as the inorganic filler; Carbodilite LF-1 was used as the hydrolysis inhibitor; and a benzoic acid ester of aliphatic polyol was used as the plasticizer. The loss factor of the resin composition was varied by the kind and the amount of inorganic filler, the presence or absence of the hydrolysis inhibitor, the presence or absence of the plasticizer. In the present examples, at least the addition of the inorganic filler and the hydrolysis inhibitor was necessary. It was found that the predetermined effect was able to be achieved even if the plasticizer was not added. The resin composition of the examples and the comparative examples are shown in Table 1.

Further, the loss factor and the Young's modulus of each resin composition are shown in Table 2. The front cabinet 2 and the back cabinet 3 as shown in Fig. 1 were formed by the injection-molding of each resin composition, and the speaker device 1 was manufactured. An external device input acoustic signals having frequencies of 0 Hz to 20000 Hz to the speaker device 1 to generate acoustic waves and several persons (five persons) evaluated the sound quality by hearing (organoleptic evaluation). Further, the 20 degree specular glossiness of the design surface of the outer casing was determined for each example and each comparative example. The results are shown in Table 2.

In Table 2, the sound quality evaluation was made with an ABS resin (Comparative example 4), which has been conventionally used for the outer casin, as a reference, and good/bad is shown by the comparison with the reference. It should be noted that, in the table, "○" means that all the five evaluators evaluated the sound quality as good, "x" means that evaluation by all the five evaluators were the same as that of the reference, and "Δ" means that at least one of the five evaluators evaluated the sound quality as good.

Table 1

|  | Resin | Glass fiber | Glass bead | Talc | Hydrolysis inhibitor | Plasticizer |
|---|---|---|---|---|---|---|
| Ex. 1 | PLA | 5 | None | 15 | Contained | None |
| Ex. 2 | PLA | 5 | None | 15 | Contained | Contained |
| Ex. 3 | PLA | 10 | None | 10 | Contained | Contained |
| Ex. 4 | PLA | None | 20 | None | Contained | Contained |
| Comp. Ex. 1 | PLA | None | None | None | Contained | None |
| Comp. Ex. 2 | PLA | None | None | 30 | Contained | None |
| Comp. Ex. 3 | PLA | 30 | None | None | Contained | None |
| Comp. Ex. 4 | ABS | None | None | None | None | None |

Table 2

|  | Loss factor | Young's modulus | Sound quality | 20 degree specular glossiness |
|---|---|---|---|---|
| Ex. 1 | 0.04 | 4.9 | ○ | 60 |
| Ex. 2 | 0.08 | 3.2 | ○ | 65 |
| Ex. 3 | 0.09 | 4.5 | ○ | 60 |
| Ex. 4 | 0.04 | 4.6 | ○ | 62 |
| Comp. Ex. 1 | 0.04 | 2.8 | Δ | 70 |
| Comp. Ex. 2 | 0.03 | 8.1 | x | 60 |
| Comp. Ex. 3 | 0.03 | 6.3 | x | 40 |
| Comp. Ex. 4 | 0.02 | 2.2 | reference | 80 |

As shown in Table 2, the cabinets were formed of the resin composition of low resonance peak degree having loss factor of 0.04 or more, in Examples 1 to 4. For these examples, it was confirmed that the sound quality was improved. The sound quality was somewhat improved in Comparative Example 1 since the cabinet was formed of the resin composition of low resonance peak degree having loss factor of 0.04 or more. However, the effect of improvement in sound quality was small since the Young's modulus of the resin composition was 2.8 GPa, not exceeding 3 GPa. In other words, when the loss factor of the resin composition is 0.04 or more, the sound quality is improved effectively. When the Young's modulus of the resin composition is 3 GPa or more, the improvement in sound quality is further improved.

It was found that the molded surface (that is, the design face 2a) of the front cabinet 2 in the speaker device 1 of each of Examples 1 to 4 was a glossy surface having a 20 degree specular glossiness (Gs (20°)) of 60 or more, whereby the visually excellent design effect was exerted. In other words, the glossiness according to the surrounding environment was able to be given when the 20 degree specular glossiness was 60 degree or more.

The conventional resin composition is based on a petroleum-originated resin and adversely affects the global environment because of the depletion of petroleum resource and a large amount of $CO_2$ generated by incineration disposal. Further, when the molded article is used as the outer casing, it is desired that the molded surface of the molded article is used as-is as the design surface without being subjected to a secondary process such as coating, whereby the molded surface itself exerts desired design effect and the outer casing has grace. Specifically, an example of the design aspect required as the grace of the outer casing is glossy surface as mirror surface (for example, a black glossy surface called "piano black").

However, there is room for improving the conventional resin composition when it constitutes the outer casing of the electric device having a design surface. Specifically, the outer casing produced by molding of the conventional resin composition contains much inorganic filler and has fine concavities and convexities in the surface of the molded article after the injection molding. Further, the molded surface of the poly(lactic acid) resin composition containing the kenaf fibers presents not only the fine concavities and convexities due to the inclusion of a large amount of the kenaf fibers, but also fine concavities and convexities due to shrinkage caused by recrystallization of the poly(lactic acid) resin. The fine convexities and concavities impair the glossiness, such as mirror, on the design surface gracing the molded article. For these reasons, the design surface is required to be subjected to the secondary process such as coating and printing, in order to employ the molded article as a commercial product.

On the other hand, the outer casing of the speaker device 1 of the present example has the resin composition including a resin component containing a poly(lactic acid) and/or a lactic-acid copolymer in an amount of 50 wt% or more, and at least an inorganic filler and a hydrolysis inhibitor. Further, this resin composition has a loss factor of 0.04 or more and this construction makes it possible to suppress the resonance due to the vibration caused by acoustic waves, whereby the acoustic device of high quality can be provided. Further, the molded article has a glossy surface having 20 degree specular glossiness (Gs (20°)) of 60 or more, determined according to JIS Z 8741. Therefore, each of the outer casings of the present examples can exert the design effect such that the speaker device 1 has excellent grace, because of the glossy surface with 20 degree specular glossiness (Gs (20°)) of 60 or more.

As described above, the embodiments have been described as examples of the techniques in the present disclosure. For this purpose, the attached drawings and the detailed description are provided.

Therefore, the constitutional elements described in the attached drawings and the detailed description may include not only ones essential to solving the problems, but also ones inessential to solving the problems. Thus, such inessential elements should not be recognized as the essential elements immediately by the fact that such inessential elements are described in the attached drawings and the detailed description.

Further, the above-described embodiments are for exemplifying the technique in the present disclosure, and therefore various change, substitution, addition and elimination can be made within the scope of the claims and the equivalents thereof.

Industrial Applicability

The acoustic device of the present technique contains the environmental resin, which is the earth-conscious resin, as the main component of the outer casing, and has the low resonance peak degree and a surface with high specular glossiness, and therefore, can be applied to the outer casing of the acoustic device such as the speaker devices, stereo component systems, CD players, miniature stereo component systems, car audio, portable music players, IC recorders, displaying devices with built-in speakers (including liquid crystal displays, organic EL displays, plasma displays and the like) and the outer casings of the electric components.

Description of Reference Numerals

1    Speaker device
2    Front cabinet
2a   Design surface
3    Back cabinet
4    Speaker net
5    Stand
6    Tweeter speaker
7    Woofer speaker

**Claims**

1.  An acoustic device provided with an outer casing comprising a molded article which is made of a resin composition comprising a resin component comprising poly(lactic acid) and/or a lactic acid copolymer in an amount of 50 % by weight or more, and at least an inorganic filler and a hydrolysis inhibitor, wherein
    the resin composition has a loss factor of 0.04 or more, and
    the molded article has a glossy surface having a 20 degree specular glossiness ($G_s(20°)$) of 60 or more, measured according to JIS Z 8741.

2.  The acoustic device according to claim 1, wherein the resin composition has a dynamic elastic modulus of 3 GPa or more.

3.  The acoustic device according to claim 1, wherein the inorganic filler of the resin composition imparts resonance peak degree at a low sound frequency range.

4.  The acoustic device according to claim 1, wherein the inorganic filler of the resin composition has optical transparency.

Fig. 1

Fig. 2

<table>
<tr><td colspan="2" align="center">**INTERNATIONAL SEARCH REPORT**</td><td>International application No.<br>PCT/JP2013/000500</td></tr>
</table>

A.   CLASSIFICATION OF SUBJECT MATTER
*H04R1/02*(2006.01)i, *C08K3/00*(2006.01)i, *C08L67/04*(2006.01)i, *C08L101/16*
(2006.01)i

According to International Patent Classification (IPC) or to both national classification and IPC

B.   FIELDS SEARCHED

Minimum documentation searched (classification system followed by classification symbols)
H04R1/02, C08K3/00, C08L67/04, C08L101/16

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2004-186915 A  (Sony Corp.),<br>02 July 2004 (02.07.2004),<br>paragraphs [0017] to [0048]; table 1<br>& US 2006/0124383 A1     & EP 1569496 A1<br>& WO 2004/052047 A1     & KR 10-2005-0085263 A<br>& CN 1720761 A          & KR 10-1043838 B | 1-4 |
| Y | JP 05-202278 A  (Dainippon Ink and Chemicals, Inc.),<br>10 August 1993 (10.08.1993),<br>paragraphs [0010], [0032]; table 1<br>(Family: none) | 1-4 |
| Y | JP 05-112726 A  (Kuraray Co., Ltd.),<br>07 May 1993 (07.05.1993),<br>paragraphs [0016] to [0017]; table 2<br>(Family: none) | 1-4 |

☐   Further documents are listed in the continuation of Box C.       ☐   See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>    21 February, 2013 (21.02.13) | Date of mailing of the international search report<br>    05 March, 2013 (05.03.13) |
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06169498 A

- JP 2004186915 A

**Non-patent literature cited in the description**

- **SERIZAWA et al.** Development of Kenaf-Fiber-Reinforced Poly(lactic acids). *Proceedings of the 14th Annual Meeting of the Japan Society of Polymer Processing,* 2003, 161-162